# DEMANDE DE BREVET EUROPEEN

(11) **EP 3 666 741 A1**
(43) Date de publication de la demande: **17.06.2020**
(21) Numéro de dépôt: 19214046.5
(22) Date de dépôt: 06.12.2019
(51) Int. Cl.: C03C 19/00, C03C 17/245, C03C 17/23, C03C 15/00

(54) **SURFACE ANTIREFLET DIFFUSANTE ET CONDUCTRICE**

(30) Priorité: 10.12.2018 FR 1872614
(71) Demandeur: COMMISSARIAT À L'ÉNERGIE ATOMIQUE ET AUX ÉNERGIES ALTERNATIVES, 75015 Paris (FR)
(72) Inventeur: SZAMBOLICS, Helga, 38054 GRENOBLE cedex 09 (FR); DUCROS, Cédric, 38054 GRENOBLE cedex 09 (FR); DUNOYER, Nicolas, 38054 GRENOBLE cedex 09 (FR); OLLIER, Emmanuel, 38054 GRENOBLE cedex 09 (FR)
(74) Mandataire: Guérin, Jean-Philippe

(57) **Abrégé**

[L'invention concerne une surface antireflet diffusante et conductrice, comprenant un matériau conducteur électrique (3), continu, d'épaisseur variable, déposé sur une surface texturée (22) de façon à rendre l'ensemble antireflet et diffusant.

## Description

L'invention concerne les surfaces antireflet diffusantes conductrices, et en particulier des surfaces réalisées sur un substrat et comportant une électrode conductrice transparente.

On retrouve usuellement de telles surfaces par exemple dans les composants optiques photovoltaïques, dans les photodétecteurs, dans les dispositifs pour générer de la lumière à partir d'une excitation électrique, ou dans les dispositifs électro chromes. L'électrode transparente est utilisée pour ses propriétés de conduction électrique, et le substrat transparent pour assurer la tenue mécanique et la protection du dispositif.

Le substrat transparent est généralement réalisé en verre, tel qu'un verre borosilicate ou sodocalcique ou substrat souples de type polymère. L'électrode transparente est fréquemment réalisée en oxyde transparent conducteur tel que de l'oxyde d'indium dopé, de l'oxyde de zinc dopé, ou de l'oxyde d'étain dopé.

Les transitions d'indice de réfraction entre les différents composants d'un dispositif optique sont à l'origine de réflexions lumineuses, qui réduisent le rendement du dispositif et modifient son apparence.

Une solution connue pour réduire la réflexion consiste à réaliser une texturation au niveau des interfaces entre les différents composants. La texturation de la face du substrat sur laquelle l'électrode est formée, permet de réduire la réflexion au niveau de l'interface entre l'électrode et le substrat.

Par une texturation de l'autre face du substrat, on réduit la réflexion à l'interface entre ce substrat et le milieu incident.

Un procédé de texturation d'une face du verre formant interface verre/air est notamment décrit dans le document 'Optimal Moth Eye Nanostructure Array on Transparent Glass Towards Broadband Antireflection', publié par Seungmuk Ji et al, dans la revue ACS Applied Material Interfaces, en 2013, 5, pages 10731-10737. Selon ce procédé, on réalise un masquage du verre selon un motif, puis une gravure partielle du verre selon ce motif de façon à obtenir une texture régulière.

Le document 'Antireflective grassy surface on glass substrates with self-masked dry etching', publié par M. Song et al, dans Nanoscale Research Letters 2013, 8:505, décrit un procédé de texturation d'une face du verre formant interface verre/air. Ce procédé est basé sur une gravure sèche, de type gravure par ion réactif dans un mélange CF4/O2, et permet de simplifier le procédé de fabrication en évitant l'utilisation de masques.

Le document 'SF6/Ar Plasma textured periodic glass surface morphologies with high transmittance and haze ratio of ITO :ZR films for amorphous silicon thin film solar cells' par Hussain et al, publié dans Vacuum 117 pages 91 à 97, décrit un procédé de texturation d'un panneau de verre pour obtenir une diffusion par du TCO déposé sur la texture formée. Ce document propose un procédé de gravure sèche à travers un masque de gravure.

L'utilisation de ces procédés de texturation ne suffit pas à réduire suffisamment la réflexion spéculaire de l'environnement et l'altération de la saturation de la couleur de la surface. Ainsi, la réflexion spéculaire réfléchit l'image de l'environnement et peut créer des effets d'éblouissements en cas de réflexion spéculaire d'une source lumineuse externe intense. La discrétion de la surface et le confort pour les observateurs environnants sont ainsi altérés.

L'invention vise à résoudre un ou plusieurs de ces inconvénients. L'invention porte ainsi sur une surface antireflet diffusante et conductrice, telle que définie dans les revendications annexées.

L'invention porte également sur un dispositif optique tel que défini dans les revendications annexées.

L'invention porte également sur un procédé de fabrication d'une surface antireflet diffusante et conductrice, tel que défini dans les revendications annexées.

L'invention porte également sur les variantes des revendications dépendantes. L'homme du métier comprendra que chacune des caractéristiques de la description ou d'une revendication dépendante peut être combinée indépendamment aux caractéristiques d'une revendication indépendante, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :
[Fig.1] est une vue en coupe schématique d'un exemple de surface antireflet diffusante et conductrice selon un mode de réalisation de l'invention ;
[Fig.2] représente un exemple de structure mettant en œuvre la surface illustrée à la figure 1, dans un dispositif destiné à absorber ou émettre de la lumière ;
[Fig.3],

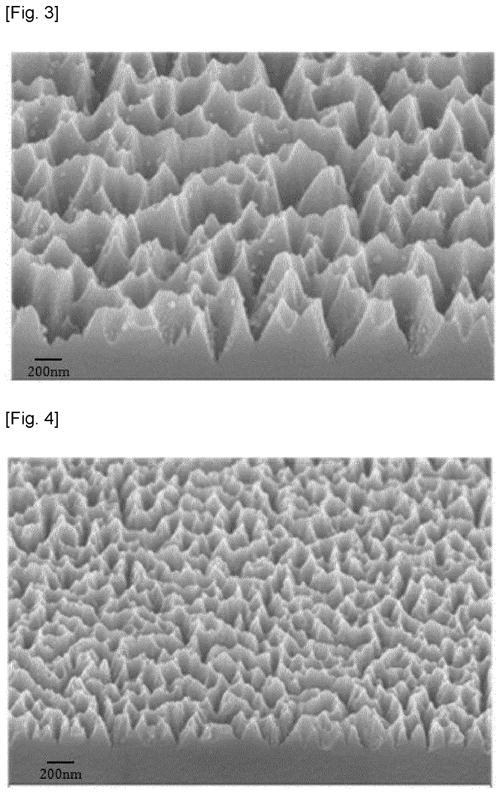

[Fig.4] et

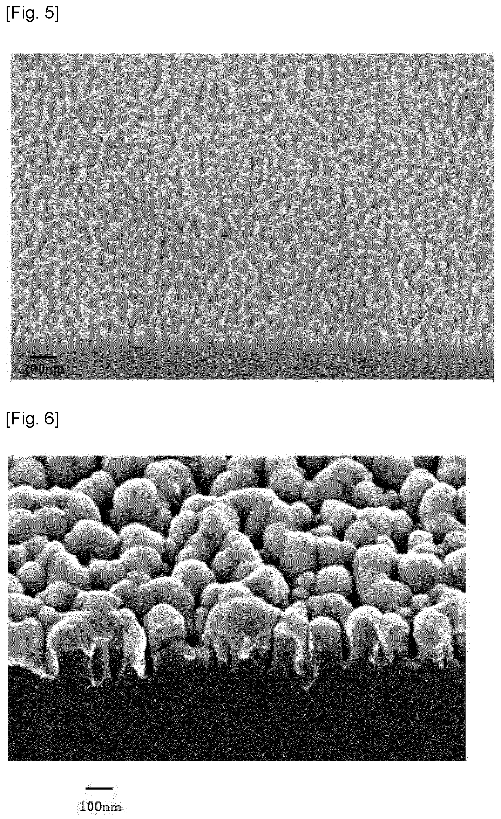

[Fig.5] sont des vues au microscope électronique à balayage de faces de verre texturées selon différents procédés de fabrication ;

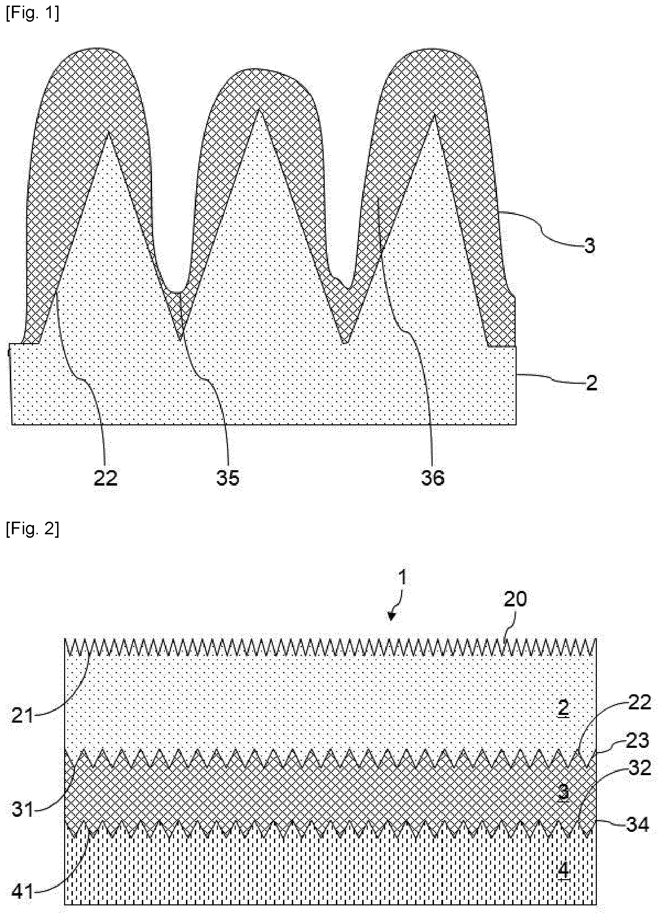

[Fig.6] est une vue en microscopie à balayage de la surface antireflet et conductrice selon l'invention et dont la structure est schématisée en Figure 1 ;

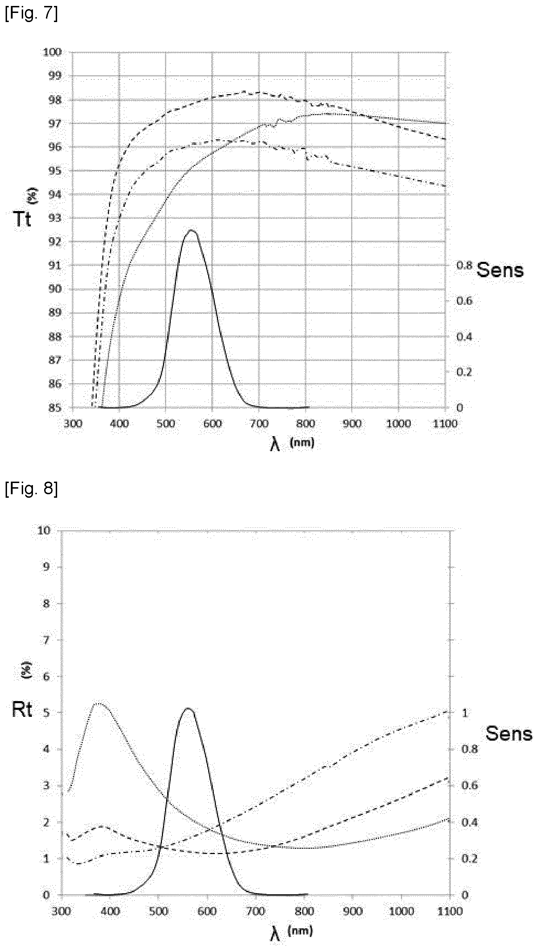

[Fig.7] et
[Fig.8] et

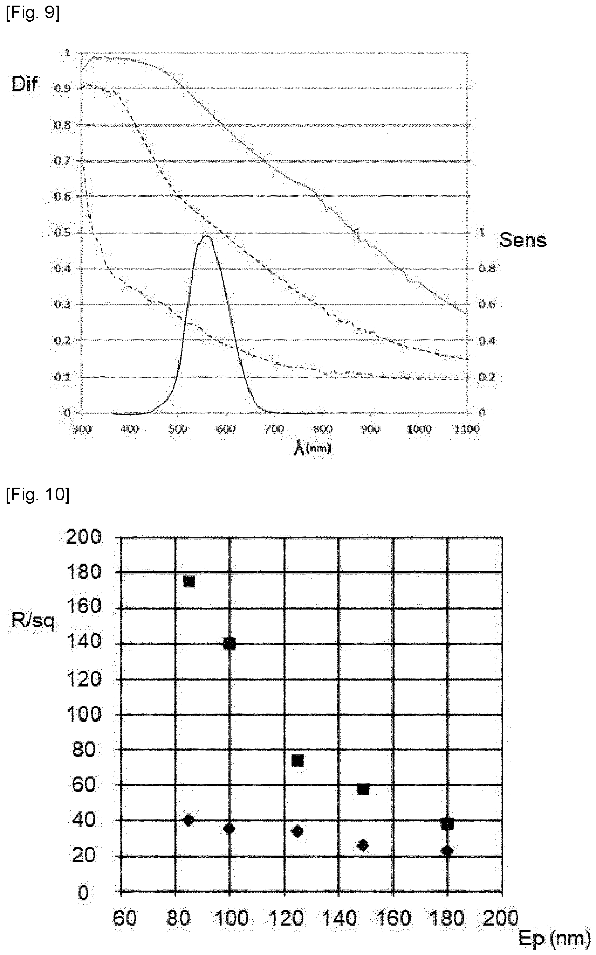

[Fig.9] sont des diagrammes illustrant différents paramètres optiques des faces de verre texturées illustrées aux figures 3 à 5;
[Fig.10] est un diagramme comparant l'influence de l'épaisseur d'un film d'électrode sur sa résistance électrique carré (R/sq), pour une structure selon l'invention et une structure de l'état de la technique ;

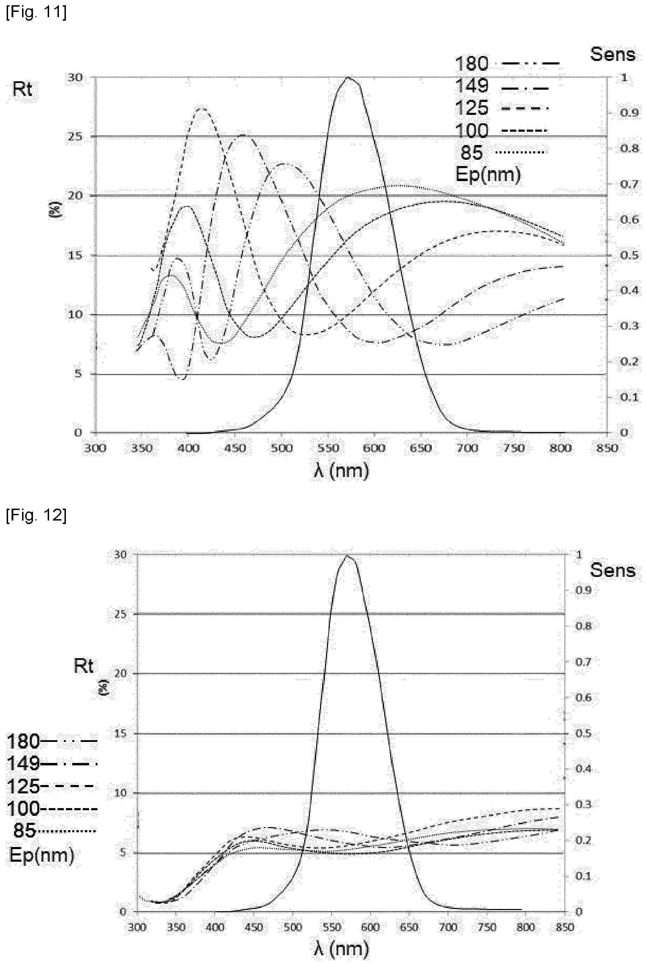

[Fig.11] est un diagramme spectral de la réflexion sur une électrode déposée sur un substrat de l'état de la technique, en fonction de l'épaisseur de cette électrode ;
[Fig.12] est un diagramme spectral de la réflexion optique sur une électrode déposée sur un substrat pour une surface selon l'invention, en fonction de l'épaisseur de cette électrode ;

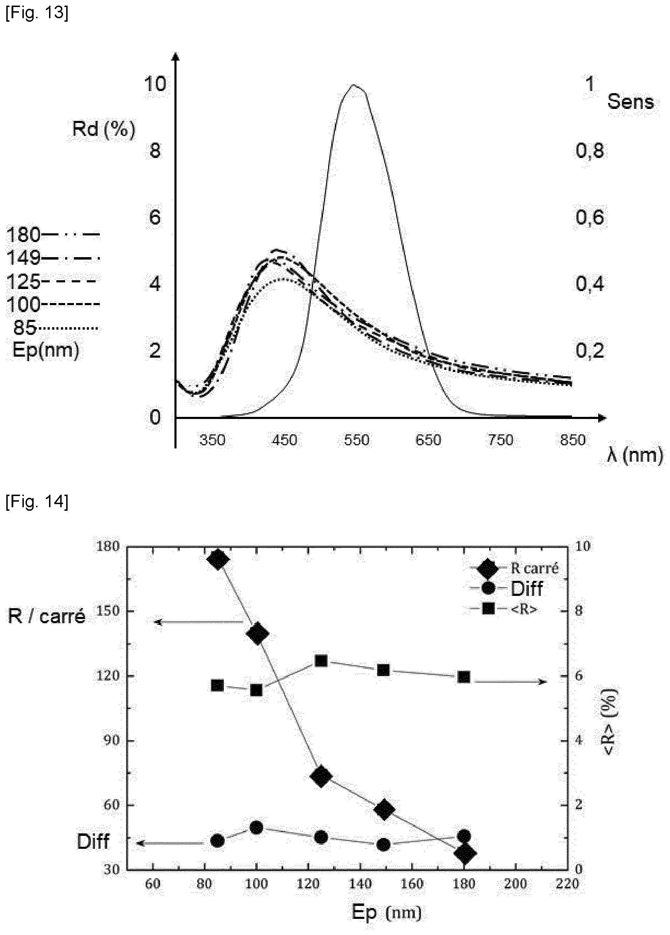

[Fig.13] est un diagramme de la réflexion optique diffuse pour différentes épaisseurs d'une électrode déposée sur un substrat texturé pour une surface selon l'invention, en fonction de la longueur d'onde et de l'épaisseur de l'électrode ;
[Fig.14] est un diagramme illustrant l'évolution de différents paramètres optiques et électriques (<R> réflexion moyenne sur la gamme 400-800nm, R/carré la résistance électrique carré, et Diff le taux de réflexion diffuse) en fonction de l'épaisseur d'une électrode sur un substrat texturé, pour une surface selon l'invention.

On désignera une face texturée comme une face présentant une rugosité ou un relief par rapport à une forme géométrique lisse.

Une surface antireflet diffusante et conductrice illustrée dans la figure 1 peut être utilisée seule ou intégrée dans un dispositif. Dans le cas où une fonction électrique est nécessaire, la surface antireflet peut jouer le rôle de contact électrique.

La figure 2 est une vue en coupe schématique d'un exemple d'intégration de la surface antireflet diffusante et conductrice dans un dispositif 1 selon un mode de réalisation de l'invention. Le dispositif 1 comprend un substrat de verre 2, une électrode transparente 3 et une couche active 4 de dispositif optique formée d'une ou plusieurs couches. L'électrode transparente 3 est positionnée en contact entre le substrat de verre 2 et la couche active de dispositif optique 4.

Le substrat 2 est par exemple réalisé en verre borosilicate ou en verre sodocalcique. Le substrat de verre 2 comporte une face externe 21 en contact avec l'air au niveau d'une interface 20, et une face interne 22 en contact avec l'électrode 3 au niveau d'une interface 23. Les faces 21 et 22 peuvent être opposées et texturées.

L'électrode transparente 3 est continue, afin de pouvoir transporter des charges électriques. L'électrode 3 est par exemple réalisée en un oxyde conducteur tel que l'oxyde de zinc dopé, l'oxyde d'étain dopé, ou l'oxyde d'indium dopé. L'électrode transparente peut également être réalisée en un alliage de ces matériaux, par exemple en ITZO. Au niveau de l'interface 23, l'électrode transparente 3 comporte une face 31 en contact avec la face 22 et de forme complémentaire. L'électrode transparente 3 comporte également une face 32, opposée à la face 31. Cette face 32 est en contact avec la couche active 4 de dispositif optique au niveau d'une interface 34.

La face 21 présente une texturation appropriée qui lui permet d'obtenir une fonction antireflet dont la réflexion résiduelle est majoritairement diffuse. De préférence, la texturation de la face 21 est configurée de sorte que la proportion de réflexion diffuse par rapport à la réflexion totale est au moins égale à 20% et pouvant aller jusqu'à plus de 80% (Fig. 9).

La texturation de la face 21 sera avantageusement configurée de sorte que la réflexion optique à l'interface 20, pondérée par la sensibilité spectrale humaine, au niveau de cette face 21, est inférieure à 3%.

La face 22 présente avantageusement une texturation appropriée qui lui permet d'obtenir une limitation de la réflexion totale et une augmentation de la transmission optique au travers de la superposition du substrat 2 et de l'électrode transparente 3 avec une proportion importante de diffusion. Ainsi, en diffusant la lumière réfléchie et transmise on évite la réflexion de l'environnement (effet antireflet, amélioration des couleurs grâce à la réduction de la réflexion de la lumière ambiance sur la surface), on limite des effets d'éblouissement liés à la réflexion spéculaire d'une source lumineuse intense, on améliore le rendement d'un éventuel dispositif destiné à absorber ou à émettre de la lumière. Avantageusement, la texturation de la face 22 est configurée de sorte que la proportion de réflexion diffuse dans la réflexion optique totale au travers de la superposition du substrat 2 et de l'électrode 3 est contrôlable dans une gamme large.

Avantageusement, la texturation de la face 22 est configurée de sorte que la réflexion optique de la superposition du substrat 2 et de l'électrode 3, est inférieure à 6.5 %.

La texturation de la face 22 est surtout utilisée pour faciliter la formation d'une électrode 3 texturée avec des propriétés détaillées par la suite.

Selon l'invention, la face 32 (et donc l'interface de contact 34 entre l'électrode transparente 3 et un milieu 4) est texturée, de sorte que la lumière réfléchie ou transmise à cette interface soit respectivement minimisée ou maximisée et de façon diffuse.

Avantageusement, les texturations des faces des milieux 1, 2, 3 sont configurées de sorte que la réflexion optique de la lumière provenant du milieu 1 est inférieure à 6,5%.

Selon le mode de formation choisi pour l'électrode transparente 3, la géométrie et la texturation de la face 32 (et donc de l'interface de contact 34) peut dépendre de la géométrie et de la texturation de la face 22.

En particulier, pour un procédé de dépôt de l'électrode transparente 3 sur la face 22 avec certains paramètres, on pourra reproduire partiellement des reliefs de la texturation de la face 32 superposés aux reliefs de la texturation de la face 22.

Afin de favoriser la reproduction des reliefs de la face 22 au niveau de la face 32 (et donc au niveau de l'interface 34) et donc de conserver une certaine texturation de la face 34, même avec un niveau de hauteur amoindri des reliefs, on peut prévoir que l'électrode 3 présente une épaisseur limitée par rapport à la profondeur de la texturation de la face 22, de préférence limitée à la valeur de sa profondeur. Un fort rapport d'aspect (rapport hauteur sur largeur des reliefs) de la face 22 favorise la conservation de la texturation de l'interface 34. Ce rapport d'aspect doit donc être augmenté pour une électrode 3 d'épaisseur plus importante.

Afin de favoriser les propriétés électriques de l'électrode 3, celle-ci présente avantageusement une épaisseur suffisante pour assurer sa continuité électrique autour des structures. Afin de favoriser la continuité électrique de l'électrode 3, celle-ci présente avantageusement une épaisseur au moins égale à 25% de la profondeur de la texturation de la face 22.

Avantageusement, pour favoriser la proportion de diffusion dans la réflexion ou transmission à l'interface 34 d'une part, et à l'interface 23 d'autre part, l'épaisseur de l'électrode 3 est avantageusement non uniforme : l'épaisseur de l'électrode 3 au niveau du fond de la texturation de la face 22 est inférieure à son épaisseur au niveau des pics de la texturation de la face 22.

Les figures 3 à 6 sont des vues au microscope à balayage à une même échelle, de la surface de substrats de verre ayant fait l'objet de gravures plasma de texturation avec différents paramètres, selon des procédés détaillés par la suite.

De tels substrats ont permis de réaliser un certain nombre d'expérimentations pour déterminer leur influence sur des paramètres optiques ou électriques d'un substrat antireflet diffusant et conducteur. Les résultats de différentes expérimentations sont notamment illustrés dans les diagrammes des figures 7 à 14.

Un point commun entre les reliefs obtenus par les différents paramètres de texturation du substrat, comme illustré aux figures 3 à 5, est que, contrairement aux structures présentées dans l'état de l'art, la texturation du substrat obtenue se présente sous la forme d'un ensemble désordonné de parois interconnectées, de section triangulaire. Ces parois s'étendent sur des distances qui varient de 0.2 à quelques micromètres. La largeur moyenne et les hauteurs des structures obtenues avec les trois conditions de gravure sont listés dans le Tableau 1. La largeur et la hauteur de texturation sont dépendantes l'une de l'autre et liées aux paramètres de gravure. Ces paramètres géométriques favorisent la diffusion de la lumière. Le facteur de forme est toujours supérieur à 1. La surface du verre gravé ne présente pas des surfaces planes résiduelles, ce qui favorise une faible réflexion.

Pour l'exemple illustré à la figure 3, le pas moyen entre les motifs du relief de texturation est de 300 nm. La hauteur des motifs du relief est comprise entre 330 et 600 nanomètres, avec une moyenne estimée à 465 nm. Le rapport hauteur sur pas des motifs du relief est égal à 1,55.

Pour l'exemple illustré à la figure 4, le pas moyen entre les motifs du relief est de 160 nm. La hauteur des motifs du relief est comprise entre 170 et 340 nanomètres, avec une moyenne estimée à 255 nm. Le rapport hauteur sur pas des motifs du relief est égal à 1,59.

Pour l'exemple illustré à la figure 5, le pas moyen entre les motifs du relief est de 80 nm. La hauteur des motifs du relief est comprise entre 100 et 200 nanomètres, avec une moyenne estimée à 150 nm. Le rapport hauteur sur pas des motifs du relief est égal à 1,87.

Pour ces trois exemples de texturation, la figure 7 illustre le taux de transmission totale Tt, la figure 8 illustre le taux de réflexion totale Rt, et la figure 9 illustre le rapport Dif entre la réflexion diffuse et la réflexion totale d'un substrat 2 de verre texturé sur les deux faces. La courbe en pointillés correspond à l'exemple de la figure 3, la courbe en trait discontinu correspond à l'exemple de la figure 4 et la courbe en tiret point correspond à l'exemple de la figure 5. Dans chacun des diagrammes des figures 7 à 9, la courbe en trait plein correspond à la sensibilité spectrale humaine Sens, selon la fonction V(À) définie par l'ISO.

Différents paramètres optiques pour les exemples des figures 3 à 5 sont synthétisés dans le tableau suivant :

**[Tableaux 1]**

| Exemple : | FiG.3 | FiG.4 | FiG.5 |
|---|---|---|---|
| Réflexion totale Rt en %, pondérée par la sensibilité | 2,16 | 1,23 | 1,59 |
| Réflexion totale minimale en %, sur la plage 400-800nm | 1,28 | 1,16 | 1,11 |
| Longueur d'onde en nm, pour une réflexion totale minimale | 785 | 610 | 320 |
| Réflexion diffuse Rd en %, pondérée par la sensibilité | 1,84 | 0,66 | 0,35 |
| Rapport en pour cent, entre Rd et Rt | 85,2 | 53,7 | 22 |

La valeur de réflexion Rt sur une face externe d'un substrat de verre non traité et non texturé est usuellement de l'ordre de 8%. Le rapport Rd/Rt pour ce même substrat de verre non traité et non texturé serait usuellement de l'ordre de 1%.

Comme le montre la figure 7, une texturation des deux faces de verre selon les exemples des figures 3 à 5 permet d'obtenir une transmission optique relativement élevée et assez constante, en particulier sur la plage de sensibilité spectrale humaine.

En fonction de l'utilisation prévue de la surface antireflet, diffusante et conductrice, des critères sur les propriétés optiques et/ou électriques pourraient être imposées. Ces propriétés dépendent de la texturation appliquée au substrat diélectrique ainsi que de l'épaisseur de la couche conductrice.

Figure 6 illustre les structures obtenues après dépôt de TCO sur une des faces texturées du substrat 2. Indépendamment de l'épaisseur de TCO déposée, les structures obtenues ont une forme arrondie de dôme. L'aspect des structures est en accord avec la forme de la texturation du verre réalisée avant dépôt d'ITZO. Cela est lié au procédé de dépôt qui induit une croissance sur les pointes de texturation, générant ainsi une porosité dans la couche d'ITZO. Le détail de la structure obtenue pour une épaisseur de 150nm montre une variation de l'épaisseur de dépôt suivant la position sur la structuration: autour de 150nm sur les pics et inférieure à 25nm dans creux et parois.

Les figures 10 à 13 illustrent l'évolution des différentes propriétés électriques et optiques des surfaces ayant des propriétés antireflet diffusantes et conductrices pour différentes épaisseurs de couches conductrices de ITZO.

Le diagramme de la figure 10 compare la résistance par carré d'une électrode transparente dans le cas d'un dépôt sur un substrat de verre lisse (losanges) et dans le cas d'un dépôt sur un substrat de verre texturé (carrés) correspondant à l'exemple de la figure 3, en fonction de l'épaisseur Ep de cette électrode. Dans le cas de l'invention, on constate une diminution exponentielle de la résistance par carré en fonction de l'épaisseur, la diminution de la résistance par carré selon l'état de la technique étant linéaire. On constate également une résistance par carré supérieure avec un substrat de verre texturé par rapport à un substrat lisse, pour des électrodes de faibles épaisseurs. On constate également une résistance par carré beaucoup plus proche entre un substrat de verre texturé par rapport à un substrat lisse, pour des électrodes de fortes épaisseurs.

Les figures 11 et 12 illustrent l'influence de l'épaisseur Ep de l'électrode 3 sur les propriétés optiques de réflexion totale et diffuse de la surface antireflet, diffusante et conductrice. Comme illustré par le diagramme de la figure 11, l'épaisseur Ep d'une électrode sur un substrat de verre lisse de l'état de la technique affecte fortement la réflexion optique totale Rt, tant sur les oscillations créées par les interférences que sur la moyenne. Le diagramme de la figure 12 illustre la faible influence de l'épaisseur Ep de l'électrode sur la réflexion optique totale Rt pour un dépôt réalisé sur un substrat de verre texturé correspondant à l'exemple de la figure 3. Le diagramme de la figure 13 illustre la réflexion optique diffuse Rd pour différentes épaisseurs Ep de l'électrode 3 déposées sur un substrat texturé correspondant à l'exemple de la figure 3, en fonction de la longueur d'onde. On constate une très faible influence de l'épaisseur de l'électrode 3 sur la réflexion optique diffuse. Par ailleurs, la proportion de cette réflexion optique diffuse par rapport à la réflexion optique totale s'est avérée au moins égale à 40%, alors que cette proportion est proche de 0 pour une électrode ménagée sur un substrat lisse. Par conséquent, l'épaisseur de l'électrode 3 ne nuit pas aux propriétés d'anti-éblouissement correspondantes. La courbe en trait plein correspond à la sensibilité spectrale humaine Sens, selon la fonction V(À) définie par l'ISO.

Le diagramme de la figure 14 permet de mieux illustrer l'influence a priori très faible de l'épaisseur de l'électrode 3 sur la réflexion ou le rapport de Rd/Rt diffuse au niveau de l'interface 23. A contrario, l'épaisseur de l'électrode 3 a une forte influence sur sa résistance par carré R/sq.

Par conséquent, une électrode 3 selon l'invention peut présenter une épaisseur importante pour favoriser une résistance par carré réduite, sans pour autant accroître la réflexion optique. On peut également noter que la configuration de la texturation de la face 22 du substrat 2 est le paramètre prépondérant pour définir la réflexion optique totale à l'interface 23 ou à l'interface 20.

Le procédé de fabrication d'une surface antireflet diffusante et conductrice selon l'invention peut mettre en œuvre des étapes spécifiques de texturation des faces 21 et 22 du substrat de verre 2.

Afin de disposer d'un procédé de fabrication à la fois simple et peu coûteux, la texturation des faces 21 et 22 du substrat de verre 2 est avantageusement réalisée sans étape spécifique de masquage (étalement de particules ou photolithographie par exemple) et avec une même technologie de gravure. Avantageusement, la texturation des faces 21 et 22 est mise en œuvre par une gravure sèche de type plasma sous vide. Une telle gravure permet notamment de réaliser la texturation sans dépasser la température de transition vitreuse du verre. Avantageusement, une telle gravure est mise en œuvre pendant une durée d'au plus 30 minutes.

Des résultats d'expérimentations ont permis de déterminer que des paramètres de gravure tels que la pression, le type de mélange gazeux, la tension de polarisation et la durée de gravure permettait de modifier des paramètres de la rugosité de la face gravée. Des paramètres de rugosité de la face gravée peuvent ainsi être modifiés, tels que le pas des reliefs, la hauteur des reliefs, la largeur des reliefs et/ou le rapport hauteur/largeur des reliefs.

Des expérimentations ont ainsi été notamment menées avec des paramètres de gravure plasma suivants, sur des verres de type alumino-borosilicate (en particulier du verre commercialisé sous la référence commerciale Corning Eagle Xg) :
- un mélange gazeux de CHF₃/O₂, avec un rapport de mélange compris entre 10 et 15 ;
- une pression de travail comprise entre 50 et 200mTorr ;
- une densité de puissance radiofréquence comprise entre 1,65 et 3,56W/cm² ;
- une durée de gravure comprise entre 7 et 60 min ;
- une température de processus de 18°C.

Dans l'exemple illustré à la figure 3, les paramètres de gravure utilisés sont les suivants :
- un rapport du mélange CHF₃/O₂ de 10 ;
- une pression de travail de 200 mTorr ;
- une densité de puissance de 3,56W/cm² ;
- une durée de traitement de 30 minutes.

Dans l'exemple illustré à la figure 4, les paramètres de gravure utilisés sont les suivants :
- un rapport du mélange CHF₃/O₂ de 12 ;
- une pression de travail de 100 mTorr ;
- une densité de puissance de 2,45W/cm² ;
- une durée de traitement de 20 minutes.

Dans l'exemple illustré à la figure 5, les paramètres de gravure utilisés sont les suivants :
- un rapport du mélange CHF₃/O₂ de 15 ;
- une pression de travail de 50 mTorr ;
- une densité de puissance de 1,65W/cm² ;
- une durée de traitement de 10 minutes.

Le procédé de fabrication du dispositif 1 peut mettre en œuvre des étapes spécifiques de dépôt de l'électrode 3 après la texturation de la face 22. L'électrode 3 peut par exemple être formée par dépôt par pulvérisation magnétron d'un film conducteur transparent sur la face texturée 22. Le matériau de l'électrode 3 peut être connu en soi, par exemple un oxyde de zinc dopé, un oxyde d'étain dopé, ou un oxyde d'indium dopé.

Avec un dépôt d'une électrode 3 d'une épaisseur moyenne inférieure à la profondeur de la texturation de la face 22, les expériences ont montré que l'on pouvait obtenir une épaisseur d'électrode 3 non uniforme, selon la section grossie illustrée de façon schématique à la figure 1. Comme illustré ici, les reliefs de la face 32 de l'électrode 3 sont superposés aux reliefs de la face 22. L'électrode 3 comporte des zones 36 venant en superposition des reliefs de la face 22, et des zones 35 venant en superposition du fond de la face 22. Dans les zones 36, l'électrode 3 comporte une épaisseur supérieure à celle des zones 35. Comme illustré, cette épaisseur non uniforme est obtenue tout en garantissant la continuité de l'électrode 3.

Avantageusement, l'électrode 3 déposée doit garantir une résistance par carré au plus égale à 100 Ω/carré. Une telle résistance de l'électrode 3 permet de collecter de façon optimale les charges électriques générées au niveau du dispositif 4.

Avantageusement, l'électrode 3 déposée doit présenter une réflexion optique minimale sur une plage de longueur d'onde centrée autour de 550 nm.

## Revendications

1. Surface antireflet diffusante et conductrice, **caractérisée en ce qu'**elle comprend un matériau conducteur électrique (3), continu, d'épaisseur variable, déposé sur une surface texturée (22) de façon à rendre l'ensemble antireflet et diffusant, la surface comportant une structuration de surface d'un matériau et un dépôt conducteur électrique dont la texturation est anisotrope dans le plan, la texturation formant des vallées dont la longueur est supérieure à la largeur et séparées par des parois de section triangulaire.

2. Surface antireflet diffusante et conductrice selon la revendication 1, dans laquelle le rapport de forme de la structuration est supérieur à 0.5.

3. Surface antireflet diffusante et conductrice selon la revendication 2, dans lequel le matériau conducteur électrique (3) présente une épaisseur au plus égale à une profondeur de la texturation.

4. Surface antireflet diffusante et conductrice selon l'une quelconque des revendications précédentes, dans lequel le matériau conducteur électrique (3) présente une épaisseur au moins égale à 120 nm.

5. Surface antireflet diffusante et conductrice selon l'une quelconque des revendications 1 à 3, dans lequel le matériau conducteur électrique (3) présente une épaisseur au moins égale à 25% de la profondeur de la texturation.

6. Surface antireflet diffusante et conductrice selon l'une quelconque des revendications précédentes, dans lequel les reliefs de la texturation de l'interface de contact (34) sont superposés aux reliefs de la texturation de la deuxième face (22).

7. Surface antireflet diffusante et conductrice selon la revendication 6, dans lequel l'épaisseur du matériau conducteur électrique (3) est supérieure au niveau des pics des reliefs de la texturation (22) par rapport à son épaisseur au niveau du fond de la texturation (22).

8. Surface antireflet diffusante et conductrice (1) selon l'une quelconque des revendications précédentes, dans lequel le matériau conducteur électrique (3) est réalisé dans un matériau choisi dans le groupe constitué de l'oxyde de zinc dopé, de l'oxyde d'étain dopé, de l'oxyde d'indium dopé et de leurs alliages, ou des matériaux carbonés comme les nanotubes de carbone ou le graphène ou des couches métalliques fines en Ag, Al, Cu, Au ou des nanotubes de matériaux conducteurs comme l'argent ou en une combinaison de ces matériaux.

9. Dispositif optique (1) comprenant au moins une surface antireflet diffusante et conductrice selon l'une quelconque des revendications 1 à 8.

10. Procédé de fabrication d'une surface antireflet diffusante et conductrice, comprenant les étapes de :
- texturer une première face (21) par gravure plasma d'un substrat transparent, par exemple en verre (2) de sorte que cette première face transmette efficacement la lumière avec un taux de réflexion résiduelle essentiellement diffuse ;
- texturer une deuxième face (22) par gravure plasma du substrat (2);
- déposer une couche conductrice transparente sur la deuxième face (22) du substrat (2) de façon à former une électrode (3) ayant une première face (31) en contact avec la deuxième face du substrat, et une deuxième face opposée à la première face de l'électrode, de sorte que la deuxième face (32) conserve au moins une partie de la texturation de la deuxième face (22) du substrat, le dépôt conducteur électrique ayant une texturation anisotrope dans le plan, la texturation formant des vallées dont la longueur est supérieure à la largeur et séparées par des parois de section triangulaire.

11. Procédé de fabrication d'une surface antireflet diffusante et conductriceselon la revendication 10, dans lequel lesdites étapes de texturation sont réalisées sans masquage des faces du substrat (2) préalablement à la gravure des structures.

12. Procédé de fabrication d'une surface antireflet diffusante et conductrice selon la revendication 10 ou 11, dans lequel l'épaisseur de la couche conductrice transparente déposée est au plus égale à la profondeur de la texturation de la deuxième face (22) du substrat.

13. Procédé de fabrication d'une surface antireflet diffusante et conductrice selon l'une quelconque des revendications 10 à 12, dans lequel l'épaisseur de la couche conductrice transparente déposée est supérieure au niveau des pics des reliefs de la texturation de la deuxième face (22) du substrat par rapport à son épaisseur au niveau du fond de la texturation de la deuxième face (22) du substrat.
